# EUROPEAN PATENT SPECIFICATION

(11) **EP 4 178 184 B1**
(45) Date of publication and mention of the grant of the patent: **15.04.2026**
(21) Application number: 22199845.3
(22) Date of filing: 05.10.2022
(51) Int. Cl.: H04M 1/02, G06F 1/16, H04B 1/3883, H01M 10/0525, H01M 50/202, H01M 50/247, H01M 50/296

(54) **BATTERY FAULT DETECTION ASSEMBLIES**
BATTERIEFEHLERDETEKTIONSANORDNUNGEN
ENSEMBLES DE DÉTECTION DE DÉFAUT DE BATTERIE

(30) Priority: 09.11.2021 IN 202111051212; 22.12.2021 US 202117645508
(43) Date of publication of application: 10.05.2023
(73) Proprietor: Hand Held Products, Inc., Charlotte, NC 28202 (US)
(72) Inventor: MOURYA, Rahul, Charlotte, 28202 (US); PANDEY, Ashutosh Kumar, Charlotte, 28202 (US)
(74) Representative: Haseltine Lake Kempner LLP

(56) References cited:
- CN-A- 113 131 105
- CN-U- 203 398 208
- US-A- 6 157 545

## Description

### TECHNOLOGICAL FIELD

Example embodiments of the present disclosure relate generally to mobile devices and, more particularly, to devices, systems, assemblies, and methods for detecting battery faults.

### BACKGROUND

Mobile devices (e.g., personal digital assistants (PDAs), mobile phones, laptops, scanners, and the like) may use batteries to supply power to these devices so that these devices may perform their intended operations. The inventors have identified numerous deficiencies with these existing technologies in the field, the remedies for which are the subject of the embodiments described herein.
US 6157545 A concerns batteries and connecting them for use as power supplies.
CN 113 131 105 A concerns a battery protection structure.
CN 203 398 208 U concerns a lithium battery protection device.

### BRIEF SUMMARY

Aspects of the present invention are defined in the accompanying claims. According to a first aspect there is provided a mobile device in accordance with claim 1. Advantageous optional features are defined in the dependent claims.

Apparatuses, devices, systems, assemblies, and associated methods of assembling/manufacturing are provided for mobile devices. In some embodiments, a mobile device is provided. The example mobile device may comprise a body defining a cavity; and a battery component that is configured to be at least partially disposed within the cavity, the battery component comprising at least one battery connector disposed on an outer surface of the battery component, wherein: the at least one battery connector is positioned to make contact with at least one electrical connector of the mobile device in order to provide power to the mobile device, and the mobile device is configured to prevent formation of a contact between the at least one battery connector and the at least one electrical connector in an instance in which a size or position of the battery component exceeds a battery bulge threshold.

In some embodiments, the battery component comprises lithium-ion or a lithium polymer.

In some embodiments, the mobile device further comprises a battery cover at least partially disposed on an outer surface of the battery component.

In some embodiments, the at least one battery connector is at least partially disposed on one or more of a side surface and a bottom surface of the battery component.

In some embodiments, the mobile device comprises at least one receiving element disposed on an inner surface of the mobile device that is configured to engage at least a portion of the battery component.

In some embodiments, the at least one electrical connector is disposed on an inner bottom surface of the mobile device adjacent the cavity.

In some embodiments, the receiving element comprises a notch, groove, or protuberance.

In some embodiments, the at least one receiving element is configured to limit movement of a first side of the battery component, and the at least one battery connector is disposed on a second side of the battery component opposite the first side.

In some embodiments, the battery component defines at least one slot for engaging with the at least one receiving element.

In some embodiments, the at least a portion of the battery component is configured to rotate with respect to an axis of the at least one receiving element when engaged with the at least one slot in the instance in which the size or position of the battery component exceeds the battery bulge threshold.

In some embodiments, the battery bulge threshold is between 5% and 10% of a battery component size.

In some further embodiments, another example mobile device is provided. The example mobile device may comprise a body defining a cavity, and a battery component that is configured to be at least partially disposed within the cavity, the battery component comprising a first battery connector, a second battery connector and a third battery connector disposed on an outer surface of the battery component, wherein: each of the first battery connector, the second battery connector, and the third battery connector is positioned to make contact with a respective electrical connector of the mobile device in order to provide power to the mobile device, and the mobile device is configured to prevent formation of a contact between each of the first battery connector, the second battery connector, and the third battery connector and a respective electrical connector in an instance in which a size or position of the battery component exceeds a battery bulge threshold.

The above summary is provided merely for purposes of summarizing some example embodiments to provide a basic understanding of some aspects of the invention. Accordingly, it will be appreciated that the above-described embodiments are merely examples and should not be construed to narrow the scope of the invention in any way. It will be appreciated that the scope of the invention encompasses many potential embodiments in addition to those here summarized, some of which will be further described below.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIGS. 1 illustrates perspective views of example mobile devices in accordance with various embodiments of the present disclosure;
FIG. 2 illustrates a perspective view of an example conventional battery component in accordance with various embodiments of the present disclosure;
FIG. 3A and FIG. 3B illustrate side views of an example conventional battery component in accordance with various embodiments of the present disclosure;
FIG. 4A and FIG. 4B illustrate side views of an example conventional mobile device in accordance with various embodiments of the present disclosure;
FIG. 5 illustrates a perspective view of an example battery component in accordance with various embodiments of the present disclosure;
FIG. 6 illustrates a perspective view of another example battery component in accordance with various embodiments of the present disclosure; and
FIG. 7A and FIG. 7B illustrate side views of an example mobile device in accordance with various embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The term "comprising" is used herein to mean "including, but not limited to" and should be interpreted in the manner it is typically used in the context of patent drafting. Use of broader terms such as comprises, includes, and having should be understood to provide support for narrower terms such as consisting of, consisting essentially of, and comprised substantially of.

Terms such as "front," "rear," "top," "bottom," "side," and the like are used herein for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

The term "electronically coupled" or "in electronic communication with" in the present disclosure refer to two or more electrical elements (for example, but not limited to, an example processing circuitry, communication module, input/output module memory, humidity sensing component, cooling element, gas detection component) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

In various examples, mobile devices such as personal digital assistants (PDAs), mobile phones, laptops, scanners, wearable devices, tablets, and the like, may use batteries (e.g., lithium-ion batteries) to supply power to these devices so that these devices may perform their intended operations. In many examples, batteries (e.g., lithium-ion batteries) use a chemical reaction to generate power. For example, while a lithium-ion battery is charging, lithium ions move from a positive electrode/terminal to a negative electrode/terminal through an electrolyte material. When the battery is discharging, the lithium ions move in the opposite direction, from the negative electrode/terminal to the positive electrode/terminal. The example lithium-ion battery may be rechargeable and therefore these chemical reactions may occur repeatedly over the battery's lifecycle (e.g., 100s or 1000s of times). As the example lithium-ion battery ages, the chemical reactions may no longer complete perfectly or optimally. For example, certain conditions (e.g., overcharging, deep discharging, or battery exposure to high temperatures) may generate excess current within a battery causing a buildup of heat and/or gas to accumulate (e.g., an outgassing condition). Such conditions may result in physical damage and/or changes to the battery. By way of example, a lithium-ion battery in poor working condition may appear swollen or bloated as a result of an outgassing condition.

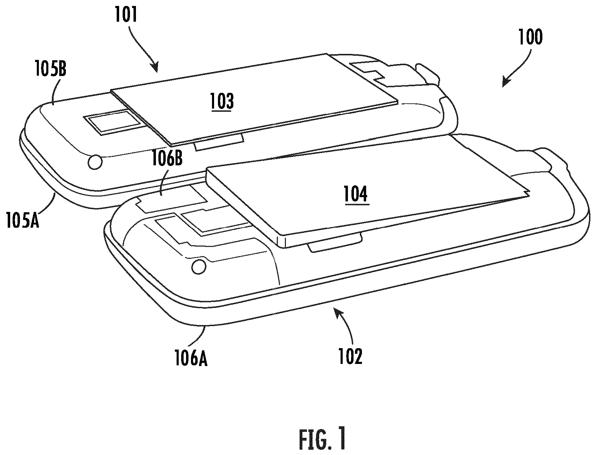

Referring now to FIG. 1, an example schematic diagram depicting a perspective view 100 of a first mobile device 101 and a second mobile device 102 in accordance with some embodiments of the present disclosure is provided.

As depicted in FIG. 1, the first mobile device 101 comprises a substantially rectangular cuboid body defining a first top surface 105A and a first bottom surface 105B. The body of the first mobile device 101 may support and/or contain various circuitry components, such as processors, speakers, cameras, scanners, and/or the like that are configured to facilitate various functionalities of the first mobile device 101. The first mobile device 101 may be configured for use in any industry, environment, or application without limitation and may include any number of associated components, elements, computing devices, processors, and/or the like in order to perform the operations associated with a particular industry, environment, or application. In various embodiment, the first top surface 105A may include one or more input elements, such as buttons, knobs, dials, touch screen features, or the like, to facilitate interaction with the first mobile device 101 by an operator.

Additionally, as depicted, the first mobile device 101 comprises a first battery component 103 that is removably secured to at least a portion of the first bottom surface 105B of the first mobile device 101. In various embodiments, the first battery component 103 supplies power to facilitate operations of the first mobile device 101. As shown, the body of the first mobile device 101 defines a cavity on the first bottom surface 105B of the first mobile device 101 such that, in operation, the first battery component 103 can be received within the cavity. The cavity of the first mobile device 101 may include any opening, recess, depression or the like within which the first battery component 103 can be placed so as to power (e.g., be in electrical communication with) one or more circuitry components or elements of the first mobile device 101. As illustrated, the first battery component 103 comprises a rectangular cuboid shape and is at least partially disposed within a cavity on the first bottom surface 105B of the first mobile device 101 such that the first battery component 103 can be attached or detached from the body of the first mobile device 101. In various examples, the cavity may be dimensioned (e.g., sized and/or shaped) based at least in part on the corresponding dimensions of the first battery component 103. For example, the cavity may define a rectangular cross-sectional shape so as to receive a battery component therein having a rectangular cross-sectional shape. The cavity may be dimensioned so as to limit movement of the first battery component 103 in two directions (e.g., an x - direction and a *y* - direction) within a plane that is substantially parallel with respect to the first top surface 105A and/or the first bottom surface 105B. In some examples, the first mobile device may further comprise a battery cover that encloses/secures the first battery component 103 within the cavity of the first mobile device 101, defining an outermost surface of the first mobile device 101 (e.g., adjacent the first bottom surface 105B of the first mobile device 101).

As depicted in FIG. 1, the outer surface of the first battery component 103 is coplanar with respect to the first bottom surface 105B of the first mobile device 101. Said differently, the first battery component 103 is likely to be in good condition and does not appear swollen or bloated.

As noted above, FIG. 1 illustrates a second mobile device 102. As shown, the second mobile device 102 also comprises a substantially rectangular cuboid body defining a second top surface 106A and a second bottom surface 106B. The body of the second mobile device 102 may support and/or contain various circuitry components, such as processors, speakers, cameras, scanners, and/or the like that are configured to facilitate various functionalities of the second mobile device 102. The second mobile device 102 may be configured for use in any industry, environment, or application without limitation and may include any number of associated components, elements, computing devices, processors, and/or the like in order to perform the operations associated with a particular industry, environment, or application. In various embodiment, the second top surface 106A may include one or more input elements, such as buttons, knobs, dials, touch screen features, or the like, to facilitate interaction with the second mobile device 102 by an operator.

Additionally, as depicted, the second mobile device 102 comprises a second battery component 104 that is removably secured to at least a portion of the second bottom surface 106B of the second mobile device 102. In various embodiments, the second battery component 104 supplies power to facilitate operations of the second mobile device 102. As shown, the body of the second mobile device 102 defines a cavity on the second bottom surface 106B of the second mobile device 102 such that, in operation, the first battery component 103 can be received within the cavity. The cavity of the second mobile device 102 may include any opening, recess, depression or the like within which the second battery component 104 can be placed so as to power (e.g., be in electrical communication with) one or more circuitry components or elements of the second mobile device 102. As illustrated, the second battery component 104 comprises a rectangular cuboid shape and is at least partially disposed within a cavity on the second bottom surface 106B of the second mobile device 102 such that the second battery component 104 can be attached or detached from the body of the second mobile device 102. In various examples, the cavity may be dimensioned (e.g., sized and/or shaped) based at least in part on the corresponding dimensions of the second battery component 104. For example, the cavity may define a rectangular cross-sectional shape so as to receive a battery component therein having a rectangular cross-sectional shape. Said differently, the cavity may be dimensioned so as to limit movement of the first battery component 103 in two directions (e.g., an x - direction and a *y* - direction) within a plane that is substantially parallel with respect to the second top surface 106A and/or the second bottom surface 106B. In some examples, the first mobile device 101 may further comprise a battery cover that encloses/secures the second battery component 104 within the cavity of the second mobile device 102, defining an outermost surface of the second mobile device 102 (e.g., adjacent the second bottom surface 106B of the second mobile device 102).

As further depicted in FIG. 1, the outer surface of the second battery component 104 is extends beyond a horizontal plane of the second bottom surface 106B of the second mobile device 102. In other words, the second bottom surface 106B of the second mobile device 102 is in a first plane and the outer surface of the second battery component 104 is in a second (e.g., different) plane relative to the second bottom surface 106B of the second mobile device 102. Accordingly, as depicted, the second battery component 104 is likely damaged/not in good condition (i.e., swollen or bloated).

As noted above, lithium-ion batteries undergo a chemical reaction in order to generate power. In various examples, damaged (e.g., swollen, bloated, or the like) lithium-ion batteries may pose a serious safety hazard. For instance, a swollen lithium-ion battery may become punctured, causing hazardous gases to escape which can result in a fire incident. In some examples, a damaged (e.g., swollen or bloated) lithium-ion battery may explode during use and/or in the vicinity of an end-user causing injury and/or property damage. In some examples, due to the configuration, placement and/or orientation of a battery component within an example mobile device, a damaged battery may continue to provide power to the mobile device, posing a safety hazard that may go undetected.

Known techniques and apparatuses are not configured to provide warning systems with respect to the condition of a battery, and in particular, lithium-ion batteries (e.g., while in use within a mobile device). For example, unless a user routinely opens a battery cover to inspect an example battery disposed therein, the user may be unaware that the battery is not in good condition and poses a safety hazard. In some examples, even if the user frequently performs visual inspections, the user may be unable to correctly ascertain whether or not the battery is in good condition based solely upon the visual inspections.

In order to address these problems and others, example methods, apparatuses and systems in accordance with various embodiments of the present disclosure are provided.

In some examples, an example mobile device is provided. The example mobile device may comprise a body defining a cavity, and a battery component that is configured to be at least partially disposed within the cavity, the battery component comprising at least one battery connector disposed on an outer surface of the battery component, wherein: the at least one battery connector is positioned to make contact with at least one electrical connector of the mobile device in order to provide power to the mobile device, and the mobile device is configured to prevent formation of a contact between the at least one battery connector and the at least one electrical connector in an instance in which a size or position of the battery component exceeds a battery bulge threshold. In some embodiments, the battery component comprises lithium-ion or a lithium polymer. In some embodiments, the mobile device further comprises a battery cover at least partially disposed on an outer surface of the battery component. In some embodiments, the at least one battery connector is at least partially disposed on one or more of a side surface and a bottom surface of the battery component. In some embodiments, the at least one electrical connector is disposed on an inner bottom surface of the mobile device adjacent the cavity. In some embodiments, the mobile device comprises at least one receiving element disposed on an inner surface of the mobile device that is configured to engage at least a portion of the battery component. In some embodiments, the receiving element comprises a notch, groove, or protuberance. In some embodiments, the at least one receiving element is configured to limit movement of a first side of the battery component, and the at least one battery connector is disposed on a second side of the battery component opposite the first side. In some embodiments, the battery component defines at least one slot for engaging with the at least one receiving element. In some embodiments, the at least a portion of the battery component is configured to rotate with respect to an axis of the at least one receiving element when engaged with the at least one slot in the instance in which the size or position of the battery component exceeds the battery bulge threshold. In some embodiments, the battery bulge threshold is between 5% and 10% of a battery component size.

In some further embodiments, another example mobile device is provided. The example mobile device may comprise a body defining a cavity, and a battery component that is configured to be at least partially disposed within the cavity, the battery component comprising a first battery connector, a second battery connector and a third battery connector disposed on an outer surface of the battery component, wherein: each of the first battery connector, the second battery connector, and the third battery connector is positioned to make contact with a respective electrical connector of the mobile device in order to provide power to the mobile device, and the mobile device is configured to prevent formation of a contact between each of the first battery connector, the second battery connector, and the third battery connector and a respective electrical connector in an instance in which a size or position of the battery component exceeds a battery bulge threshold. In some embodiments, the battery component comprises lithium-ion or a lithium polymer. In some embodiments, the mobile device further comprises a battery cover at least partially disposed on an outer surface of the battery component. In some embodiments, each of the first battery connector, the second battery connector, and the third battery connector is at least partially disposed on one or more of a side surface and a bottom surface of the battery component. In some embodiments, at least one of the electrical connectors is disposed on an inner bottom surface of the mobile device adjacent the cavity. In some embodiments, the mobile device comprises at least one receiving element disposed on an inner surface of the mobile device that is configured to engage at least a portion of the battery component. In some embodiments, the at least one receiving element comprises a notch, groove, or protuberance. In some embodiments, the at least one receiving element is configured to limit movement of a first side of the battery component, and each of the first battery connector, the second battery connector, and the third battery connector is disposed on a second side of the battery component opposite the first side.

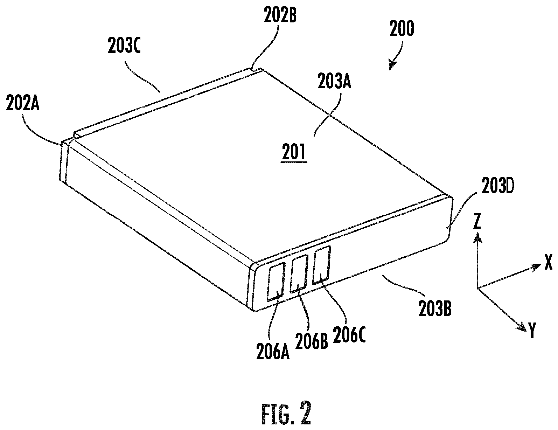

Referring now to FIG. 2, an example schematic diagram depicting a perspective view of an example conventional battery component 200 in accordance with some embodiments of the present disclosure is provided. In various embodiments, the example battery component 200 may be or comprise a lithium-ion battery, a lithium polymer (LiPo) battery, an alkaline battery, or the like. In various examples, the battery component 200 supplies power to facilitate operations of an example mobile device.

As depicted in FIG. 2, the example battery component 200 comprises a substantially rectangular cuboid body defining a top surface 203A and a second bottom surface 203B opposite the top surface 203A. The battery component 200 comprises a first slot 202A, a second slot 202B, a first battery connector 206A, a second battery connector 206B, and a third battery connector 206C. The battery component 200 may be received within a cavity (e.g., opening, recess, depression, or the like) of an example mobile device so as to power (e.g., be in electrical communication with) one or more circuitry components or elements of the example mobile device.

As noted above, and as further depicted in FIG. 2, the battery component 200 comprises a first slot 202A and a second slot 202B. In some embodiments, each of the first slot 202A and the second slot 202B defines a cavity disposed on a first side surface 203C of the battery component 200. As depicted, the first slot 202A is defines a cavity of a first end portion of the first side surface 203C and the second slot 202B defines a cavity of a second end portion of the first side surface 203C. In various examples, each of the first slot 202A and the second slot 202B may operate to secure the battery component 200 within a corresponding cavity of an example mobile device. Additionally, the first slot 202A and the second slot 202B may operate to maintain a proper orientation of the battery component 200 within a mobile device. For example, each of the first slot 202A and the second slot 202B may be configured to engage a corresponding receiving element (e.g., groove, notch, surface, and/or the like) adjacent the cavity of the example mobile device in order to secure the battery component 200 thereto.

As further depicted in FIG. 2, the battery component 200 comprises a plurality of battery connectors/terminals (as depicted, a first battery connector 206A, a second battery connector 206B and a third battery connector 206C). In some embodiments, the plurality of battery connectors may comprise a positive terminal, a negative terminal, a ground terminal, a battery condition sensing terminal (e.g., for monitoring battery component temperature), and/or the like. For example, in some embodiments, the first battery connector 206A may be a positive terminal, the second battery connector 206B may be a battery condition sensing terminal and the third battery connector 206C may be a negative terminal. As depicted in FIG. 2, the first battery connector 206A, the second battery connector 206B and the third battery connector 206C are disposed on a second side surface 203D of the battery component 200, opposite the first side surface 203C. In various embodiments, when disposed within a cavity of a mobile device, the first battery connector 206A, the second battery connector 206B and the third battery connector 206C are configured to make contact with an electrical connector (e.g., such as one or more corresponding pins) in order to form/actuate an electrical connection and provide power to a mobile device.

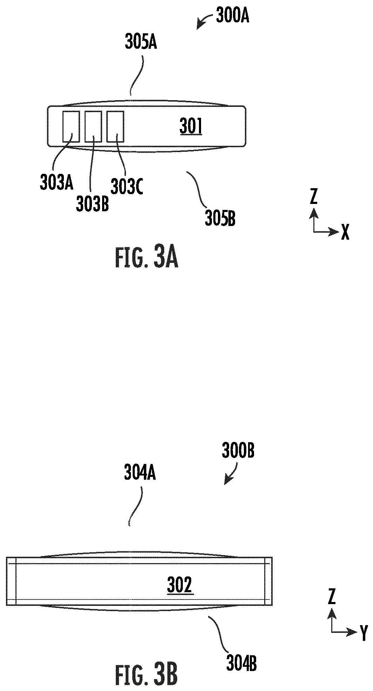

Referring now to FIG. 3A and FIG. 3B, example schematic diagrams depicting side perspective views of an example conventional battery component 300A and 300B in accordance with some embodiments of the present disclosure is provided. The battery component 300A, 300B may be similar or identical to the battery component 200 discussed above in connection with FIG. 2. Similarly, in various embodiments, the example battery component 300A and 300B may be or comprise a lithium-ion battery, a lithium polymer (LiPo) battery, an alkaline battery, or the like. In various examples, the battery component 300A and 300B supplies power to facilitate operations of an example mobile device. The battery component 300A and 300B may be received within a cavity of the example mobile device so as to power (e.g., be in electrical communication with) one or more circuitry components or elements of the example mobile device.

As depicted in FIG. 3A, the example battery component 300A comprises a substantially rectangular cuboid body defining a top surface 305A and a bottom surface 305B opposite and parallel to the top surface 305A. As illustrated, the top surface 305A and the bottom surface 305B of the battery component 300A appear swollen or bloated (i.e., the top surface 305A and the bottom surface 305B are not substantially planar or flat) indicting that the example battery component 300A is likely damaged or not in good condition.

As further depicted in FIG. 3A, the battery component 300A comprises a plurality of connectors/terminals. In particular, the battery component 300A comprises a first battery connector 303A, a second battery connector 303B, and a third battery connector 303C (e.g., a positive terminal, a battery condition sensing terminal, and a negative terminal, respectively). Each of the first battery connector 303A, the second battery connector 303B, and the third battery connector 303C are disposed on a first side surface 301 of the battery component 300A. In various embodiments, when disposed within a cavity of a mobile device, the first battery connector 303A, the second battery connector 303B and the third battery connector 303C are configured to make contact with an electrical connector (e.g., such as one or more corresponding pins) in order to form/actuate an electrical connection and provide power to the example mobile device.

Referring now to FIG. 3B, the example battery component 300B comprises a substantially rectangular cuboid body defining a top surface 304A and a bottom surface 304B opposite and parallel to the top surface 304A. In various embodiments, the battery component 300B comprises a plurality of side surfaces. As depicted, the battery component 300B comprises at least a second side surface 302. As illustrated, the top surface 305A and the bottom surface 305B of the battery component 300A appear swollen or bloated (i.e., the top surface 305A and the bottom surface 305B are not substantially planar or flat) indicting that the example battery component 300B is likely damaged or not in good condition.

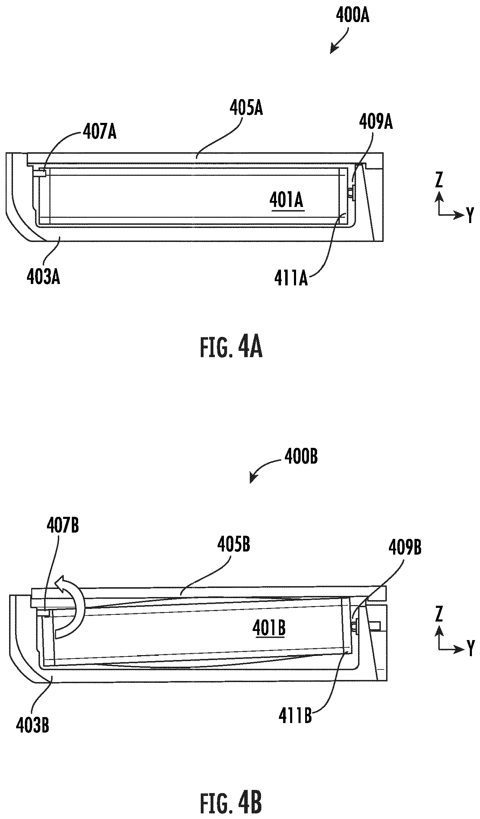

Referring now to FIG. 4A and FIG. 4B, example schematic diagrams depicting side section views of at least a portion of a conventional mobile device 400A and 400B in accordance with some embodiments of the present disclosure is provided.

As depicted in FIG. 4A, the example mobile device 400A comprises a substantially rectangular cuboid body 403A defining a top surface and a bottom surface. The body 403A of the mobile device 400A may support and/or contain various circuitry components, such as processors, speakers, cameras, scanners, and/or the like that are configured to facilitate various functionalities of the mobile device 400A. As depicted, the mobile device 400 comprises at least a battery component 401A and a battery cover 405A.

As noted above, the example mobile device 400A comprises a battery component 401A. In various embodiments, the battery component 401A supplies power to facilitate operations of the mobile device 400A. As shown, the body 403A of the mobile device 400A defines a cavity in which the battery component 401A can be received. As illustrated, the battery component 401A comprises a substantially rectangular cuboid shape and is at least partially disposed/positioned within the cavity of the mobile device 400A. Accordingly, the cavity may be dimensioned (e.g., sized and/or shaped) based at least in part on the corresponding dimensions of the battery component 401A. For example, the cavity of the mobile device 400A defines a substantially rectangular cross-sectional shape so as to receive the battery component 401A therein which also has a rectangular cross-sectional shape.

As depicted in FIG. 4A, the battery component 401 comprises at least a first slot that is configured to engage a receiving element 407A (e.g., notch, groove, protuberance, and/or the like) protruding from an inner surface of the mobile device 400A. As further illustrated, the battery component 401A comprises at least one battery connector 411A disposed on a side surface of the battery component 401A. In various examples, when the battery component 401A is disposed within the cavity of the mobile device 400A, the at least one battery connector 411A is positioned to make contact with at least one electrical connector 409A (e.g., such as one or more corresponding pins) in order to form/actuate an electrical connection and provide power to the mobile device 400A.

Additionally, as noted above, the mobile device 400A further comprises a battery cover 405A that encloses/secures the battery component 401A within the cavity of the mobile device 400A, defining an outer surface of the mobile device 400A. As further depicted, the top surface and bottom surface of the battery component 401A are substantially flat/planar. Additionally, as shown, the top surface and the bottom surface of the battery component 401A are coplanar with respect to the top surface and bottom surface of the mobile device 400A indicating that the battery component 401A is likely to be in good working condition.

Referring now to FIG. 4B, a schematic diagram depicting a conventional mobile device 400B is provided. The mobile device 400B may be similar or identical to the mobile device 400A discussed above in connection with FIG. 4A. Similarly, as noted above, the example mobile device 400B comprises a battery component 401B. In various embodiments, the battery component 401B supplies power to facilitate operations of the mobile device 400B. As shown, the body 403B of the mobile device 400B defines a cavity in which the battery component 401B can be received. As illustrated, the battery component 401B comprises a substantially rectangular cuboid shape and is at least partially disposed/positioned within the cavity of the mobile device 400B. As discussed above in relation to FIG. 4A, the cavity may be dimensioned (e.g., sized and/or shaped) based at least in part on the corresponding dimensions of the battery component 401B. As depicted in FIG. 4A, the battery component 401 comprises at least a first slot that is configured to engage a receiving element 407B (e.g., notch, groove, protuberance, and/or the like) protruding from an inner surface of the mobile device 400B. As further illustrated, the battery component 401 comprises at least one battery connector 411A disposed on a side surface of the battery component 401. In various examples, when the battery component 401B is disposed within the cavity of the mobile device 400B, the at least one battery connector 411A is positioned to make contact with at least one electrical connector 409B (e.g., as depicted, one or more corresponding pins) in order to form/actuate an electrical connection and provide power to the mobile device 400B.

Additionally, the mobile device 400B further comprises a battery cover 405A that encloses/secures the battery component 401B within the cavity of the mobile device 400B, defining an outer surface of the mobile device 400B. As depicted in FIG. 4B, the top surface and bottom surface of the battery component 401A appear swollen/bloated. Said differently, the top surface of the battery component 401B and the bottom surface of the battery component 401B are not in the same plane relative to the top surface and the bottom surface of the mobile device 400B indicating that the battery component 401B is likely damaged or not in good working condition. In some examples, as illustrated, the receiving element 407B engaged with the at least one slot of the battery component 401B may secure a first side of the battery component 401B resulting in displacement of the battery component 401B within the cavity of the mobile device 400B. Additionally, the top surface of the battery component 401A is pushing against (e.g., displacing) the battery cover 405B so that it is not properly secured to the body 403B of the mobile device 400B.

In such examples, as shown, despite the battery component 401B likely being damaged, the at least one battery connector 411B may still make contact with the at least one electrical connector 409B and thus provide power to the mobile device 400B. Accordingly, in many examples, due to the location of the battery connector(s) (e.g., battery connector 411B) with respect to the electrical connector(s) (e.g., electrical connector 409B), the mobile device 400B will continue to receive power from the battery component 401B in an instance in which it is damaged, consequently creating a safety hazard that may go undetected by an end user/operator of the mobile device 400B.

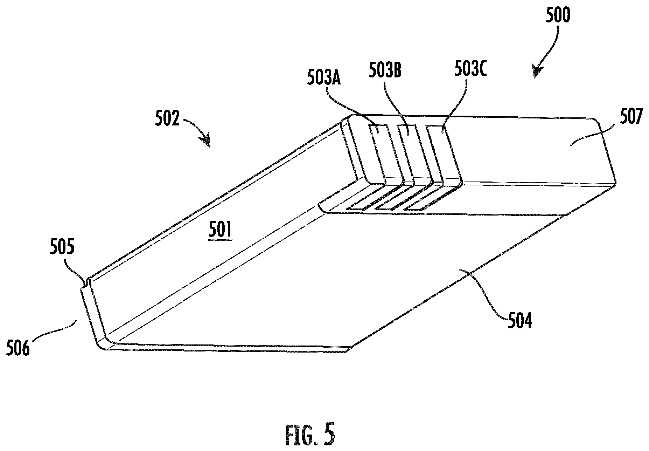

Referring now to FIG. 5, an example schematic diagram depicting a perspective view of an example battery component 500 in accordance with some embodiments of the present disclosure is provided. In various embodiments, the example battery component 500 may be or comprise a lithium-ion battery, a lithium polymer (LiPo) battery, an alkaline battery, or the like. In various examples, the battery component 500 supplies power to facilitate operations of an example mobile device.

As depicted in FIG. 5, the example battery component 500 comprises a substantially rectangular cuboid body 501 defining a top surface 502 and a bottom surface 504 opposite the top surface 502. The example battery component 500 comprises at least one slot 505, a first battery connector 503A, a second battery connector 503B and a third battery connector 503C. The battery component 500 may be received within a cavity (e.g., opening, recess, depression, or the like) of an example mobile device so as to power (e.g., be in electrical communication with) one or more circuitry components or elements of the example mobile device.

As noted above, and as further depicted in FIG. 5, the battery component 500 comprises at least one slot 505. In some embodiments, the at least one slot 505 defines a cavity disposed on a first side surface 506 of the battery component 500. In various examples, the at least one slot 505 (e.g., in conjunction with one or more other similar slots) may operate to secure at least one side of the battery component within a cavity of an example mobile device when engaged with at least one corresponding receiving element (e.g., notch, protuberance, groove, surface, and/or the like) in order to secure the battery component 500 thereto. Additionally, the at least one slot 505 may function to prevent incorrect insertion of the battery component 500 within a cavity of the mobile device. By way of example, the at least one slot 505 may be associated with at least one corresponding receiving element that is disposed on an inner surface of the mobile device such that the battery component 500 can only be inserted into the cavity when the at least one slot 505 is positioned adjacent the at least one receiving element.

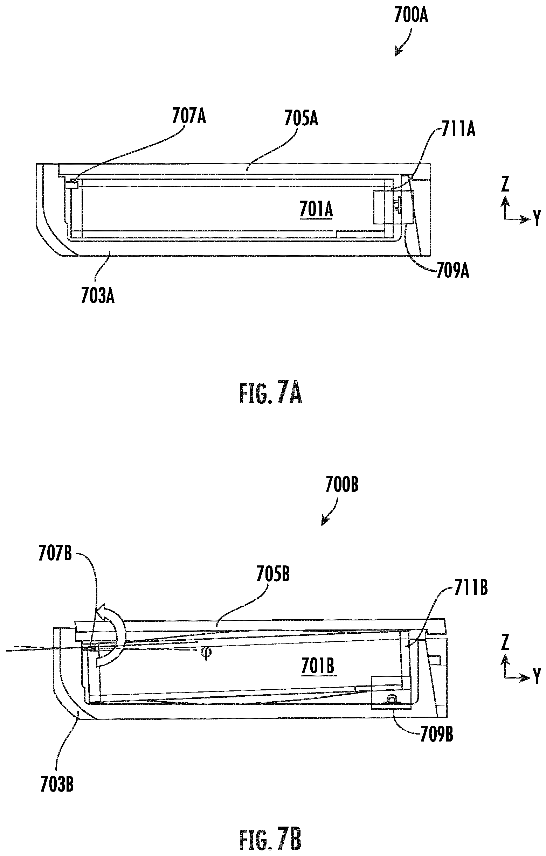

As noted above, the battery component 500 comprises a plurality of battery connectors/terminals (as depicted, a first battery connector 503A, a second battery connector 503B and a third battery connector 503C). In some embodiments, the plurality of battery connectors may comprise a positive terminal, a negative terminal, a ground terminal, a battery condition sensing terminal (e.g., for monitoring battery component temperature), and/or the like. For example, in some embodiments, the first battery connector 503A may be a positive terminal, the second battery connector 503B may be a battery condition sensing terminal and the third battery connector 503C may be a negative terminal. As depicted in FIG. 5, the first battery connector 503A, the second battery connector 503B and the third battery connector 503C are each at least partially disposed on a second side surface 507 of the battery component 500, opposite the first side surface 506. Additionally, the first battery connector 503A, the second battery connector 503B and the third battery connector 503C are each at least partially disposed on a bottom surface 504 of the battery component 500. In some embodiments, as depicted, the first battery connector 503A, the second battery connector 503B, and the third battery connector 503C are each disposed/positioned continuously along the second side surface 507 and the bottom surface 504 of the battery component 500. In various embodiments, when placed within a cavity of a mobile device, the first battery connector 503A, the second battery connector 503B and the third battery connector 503C are configured to make contact with at least one electrical connector (e.g., such as one or more corresponding compressible pins) in order to form/actuate an electrical connection and provide power to the example mobile device. Additionally, the at least one slot 505 may limit movement of the battery component 500 in two directions (e.g., an x - direction and a *y* - direction) within a plane that is substantially parallel with respect to a top surface and a bottom surface of an example mobile device. In various examples, the configuration of the battery component 500 (and in particular, placement of the first battery connector 503A, the second battery connector 503B and the third battery connector 503C) provides a passive fault detection system, as discussed below in connection with FIG. 7A and FIG. 7B.

While FIG. 5 provides an example battery component 500, it is noted that the scope of the present disclosure is not limited to the example shown in FIG. 5. In some examples, the battery component 500 may comprise one or more additional and/or alternative elements, and/or may be structured/positioned differently than those illustrated in FIG. 5. For example, the battery component 500 may comprise two battery connectors or more than three battery connectors.

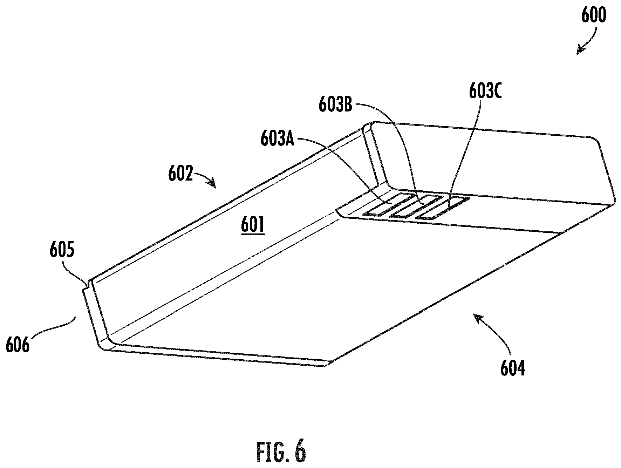

Referring now to FIG. 6, an example schematic diagram depicting a perspective view of an example battery component 600 in accordance with some embodiments of the present disclosure is provided. In various embodiments, the example battery component 600 may be or comprise a lithium-ion battery, a lithium polymer (LiPo) battery, an alkaline battery, or the like. In various examples, the battery component 600 supplies power to facilitate operations of an example mobile device.

As depicted in FIG. 6, the example battery component 600 comprises a substantially rectangular cuboid body 601 defining a top surface 602 and a bottom surface 604 opposite the top surface 602. The example battery component 600 comprises at least one slot 605, a first battery connector 603A, a second battery connector 603B and a third battery connector 603C. The battery component 600 may be received within a cavity (e.g., opening, recess, depression, or the like) of an example mobile device so as to power (e.g., be in electrical communication with) one or more circuitry components or elements of the example mobile device.

As noted above, and as further depicted in FIG. 6, the battery component 600 comprises at least one slot 605. In some embodiments, as depicted the at least one slot 605 defines a cavity disposed on a first side surface 606 of the battery component 600. In various examples, the at least one slot 605 (e.g., in conjunction with one or more other similar slots) may operate to secure at least one side of the battery component within a cavity of the mobile device when engaged with at least one corresponding receiving element (e.g., notch, protuberance, groove, surface, and/or the like).

As noted above, the battery component 600 comprises a plurality of battery connectors/terminals (as depicted, a first battery connector 603A, a second battery connector 603B and a third battery connector 603C). In some embodiments, the plurality of battery connectors may comprise a positive terminal, a negative terminal, a ground terminal, a battery condition sensing terminal (e.g., for monitoring battery component temperature), and/or the like. For example, in some embodiments, the first battery connector 603A may be a positive terminal, the second battery connector 603B may be a battery condition sensing terminal and the third battery connector 603C may be a negative terminal. As depicted in FIG. 6, the first battery connector 606A, the second battery connector 606B and the third battery connector 606C are each disposed on a bottom surface 604 of the battery component 600, opposite the top surface 602. In various embodiments, when disposed within a cavity of a mobile device, the first battery connector 603A, the second battery connector 603B and the third battery connector 603C are configured to (e.g., positioned to facilitate) contact with at least one electrical connector (e.g., such as one or more corresponding pins) in order to form/actuate an electrical connection and provide power to the example mobile device. The at least one slot 605 may limit movement of the battery component 600 in two directions (e.g., an x - direction and ay - direction) within a plane that is substantially parallel with respect to a top surface and a bottom surface of an example mobile device.

In various examples, the configuration of the battery component 600 (and in particular, placement of the first battery connector 603A, the second battery connector 603B, and the third battery connector 603C) provides a passive fault detection system, as discussed below in connection with FIG. 7A and 7B.

While FIG. 6 provides an example battery component 600, it is noted that the scope of the present disclosure is not limited to the example shown in FIG. 6. In some examples, the battery component 600 may comprise one or more additional and/or alternative elements, and/or may be structured/positioned differently than those illustrated in FIG. 6.

Referring now to FIG. 7A and FIG. 7B, example schematic diagrams depicting side section views of at least a portion of a mobile device 700A and 700B in accordance with some embodiments of the present disclosure is provided.

As depicted in FIG. 7A, the mobile device 700A comprises a substantially rectangular cuboid body 703A defining a top surface and a bottom surface. The body 703A of the mobile device 700A may support and/or contain various circuitry components, such as processors, speakers, cameras, scanners, and/or the like that are configured to facilitate various functionalities of the mobile device 700A. As depicted, the mobile device 700 comprises a battery component 701A and a battery cover 705A.

As noted above, the example mobile device 700A comprises a battery component 701A (e.g., a lithium-ion battery). In various embodiments, the battery component 701A supplies power to facilitate operations of the mobile device 700A. As shown, the body 703A of the mobile device 700A defines a cavity in which the battery component 701A can be received/positioned. As illustrated, the battery component 701A comprises a substantially rectangular cuboid shape and is at least partially disposed/positioned within the cavity of the mobile device 700A. Thus, the cavity may be dimensioned (e.g., sized and/or shaped) based at least in part on the corresponding dimensions of the battery component 701A. As depicted in FIG. 7A, the battery component 701 comprises at least a first slot that is configured to engage a receiving element 707A (e.g., notch, groove, protuberance, and/or the like) protruding from an inner surface of the mobile device 700A.

As further illustrated, the battery component 701A comprises at least one battery connector 711A at least partially disposed on both a side surface and a bottom surface of the battery component 701A. In various examples, the battery component 701A may comprise a plurality of battery connectors. The plurality of battery connectors may be similar or identical to the plurality of battery connectors (the first battery connector 503A, the second battery connector 503B and the third battery connector 503C) discussed above in connection with FIG. 5. In various examples, when the battery component 701A is disposed within the cavity of the mobile device 700A, the at least one battery connector 711A is positioned to make contact with at least one electrical connector 709A (e.g., such as one or more corresponding compressible pins) in order to form/actuate an electrical connection and provide power to the mobile device 700A.

Additionally, as noted above, the mobile device 700A further comprises a battery cover 705A that encloses/secures the battery component 701A within the cavity of the mobile device 700A, defining an outer surface of the mobile device 700A. As further depicted, the top surface and bottom surface of the battery component 701A are substantially flat/planar. Additionally, as shown, the top surface and the bottom surface of the battery component 701A are coplanar with respect to the top surface and bottom surface of the mobile device 700A indicating that the battery component 701A is likely in good working condition.

Referring now to FIG. 7B, a schematic diagram depicting a mobile device 700B in accordance with various embodiments of the present disclosure is provided. The mobile device 700B may be similar or identical to the mobile device 700A depicted in FIG. 7A. As noted above, the example mobile device 700B comprises a battery component 701B. In various embodiments, the battery component 701B supplies power to facilitate operations of the mobile device 700B. As shown, the body 703B of the mobile device 700B defines a cavity in which the battery component 701B can be received. As illustrated, the battery component 701B comprises a substantially rectangular cuboid shape and is at least partially disposed/positioned within the cavity of the mobile device 700B. As discussed above in relation to FIG. 7A, the cavity may be dimensioned (e.g., sized and/or shaped) based at least in part on the corresponding dimensions of the battery component 701B. As depicted in FIG. 7A, the battery component 701 comprises at least a first slot that is configured to engage a receiving element 707B (e.g., notch, groove, protuberance, and/or the like) protruding from an inner surface of the mobile device 700B. As further depicted, the battery component 701 comprises at least one battery connector 711A at least partially disposed on both a side surface and a bottom surface of the battery component 701. In various examples, when the battery component 701B is disposed within the cavity of the mobile device 700B, the at least one battery connector 711A is positioned to make contact with at least one electrical connector 709B (e.g., as depicted, one or more corresponding compressible pins) in order to form/actuate an electrical connection and provide power to the mobile device 700B. In various embodiments , the at least one electrical connector 709B may be or comprise a spring loaded pin and/or may be compressible (e.g., when the at least one battery connector 711A is in contact therewith).

Additionally, the mobile device 700B further comprises a battery cover 705A that encloses/secures the battery component 701B within the cavity of the mobile device 700B, defining an outer surface of the mobile device 700B. As further depicted in FIG. 7B, the top surface and bottom surface of the battery component 701A appear swollen/bloated. Said differently, the top surface of the battery component 701B and the bottom surface of the battery component 701B are not in the same plane relative to the top surface and the bottom surface of the mobile device 700B indicating that the battery component 701B is likely damaged/not in good working condition.

As depicted, the battery component 701B is configured to rotate with respect to an axis (e.g., along a horizontal or *y* - direction) of the at least one receiving element 707B when engaged with the at least one slot. Accordingly, the receiving element 707B engaged with the at least one slot of the battery component 701B may secure a first side/end of the battery component 701B resulting in displacement of at least a portion of the battery component 701B (as shown, a second side/end, opposite the first side) within the cavity of the mobile device 700B as the condition of the battery worsens (e.g., as a battery component 701B swells over time due to an outgassing condition or other condition). In such examples, as illustrated, as a result of the battery component 701B being secured on the first side/end via the at least one receiving element 707B of the mobile device 700B, displacement of the battery component 701B within the cavity of the mobile device 700B will cause the second side/end (i.e., opposite side) of the battery component 701B to be raised at an angle (as depicted, φ) relative to the first side of the battery component 701B. Said differently, if a position and/or size of the battery component 701B is above a battery bulge threshold, then the battery component 701B will be automatically disconnected such that no power will be provided to the mobile device 700B. The term battery bulge threshold may refer to a value (e.g., relative position, angle of incidence, size associated with swelling, and/or the like) above which the battery component 701B is not deemed safe for use. In some embodiments, the battery bulge threshold may be associated with an allowable position and/or size of the battery component 701B (e.g., a displacement angle of 15% relative to a horizontal top surface of the mobile device). In another example, the battery bulge threshold may be an amount of swelling (e.g., between 5% and 15% of the original battery size) that may also be associated with a position of the battery component 701B within the cavity of the mobile device 700B. Accordingly, in various examples if the battery component 701B is not in good working condition, the at least one battery connector 711B will not make contact with the at least one electrical connector 709B (as depicted, an electrical connector 709B positioned on an inner surface (e.g., bottom surface adjacent/beneath the cavity) of the mobile device 700B. In other words, the mobile device 700B is configured to prevent formation of a contact between the at least one battery connector 711B and the at least one electrical connector 709B in an instance in which a size or position of the battery component exceeds a battery bulge threshold. Thus, in many examples, due to the relative position of the battery connector(s) (e.g., battery connector 711A) and the electrical connector(s) (e.g., electrical connector 709B), the mobile device 700B will not receive power from the battery component 701B in an instance in which it is likely damaged, thereby mitigating a potential safety hazard and providing a passive fault detection/automatic alerting system to notify the end user/operator about the condition of the battery component 701B.

While FIG. 7A and FIG. 7B provide example views of a mobile device 700A and 700B, it is noted that the scope of the present disclosure is not limited to the example shown in FIG. 7A and FIG. 7B. In some examples, an example mobile device may comprise one or more additional and/or alternative elements, and/or may be structured/positioned differently than those illustrated in FIG. 7A and FIG. 7B.

Utilizing the techniques and apparatuses discussed here, an effective system for detecting battery faults and automatically disconnecting battery components is provided. The example mobile devices and battery components are inexpensive and easy to manufacture and produce. Moreover, the apparatuses and systems described herein do not require additional and/or expensive sensing elements or components in order to effectively prevent the use of damaged battery components (e.g., lithium-ion batteries).

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A mobile device (700B) comprising:
a body (703B) defining a cavity; and
a battery component (701B) that is configured to be at least partially disposed within the cavity, the battery component (701B) comprising at least one battery connector (711B) disposed on an outer surface of the battery component (701B), wherein:
the at least one battery connector (711B) is positioned to make contact with at least one electrical connector (709B) of the mobile device (700B) in order to provide power to the mobile device (700B); and
at least one receiving element (707B) protruding out from an inner surface of the mobile device (700B) that is configured to engage at least a slot defined on the battery component (701B), and
the mobile device (700B) is configured to prevent formation of a contact between the at least one battery connector (711B) and the at least one electrical connector (709B),
wherein the battery component (701B) is configured to rotate with respect to an axis of the at least one receiving element (707B) when it is engaged with the at least one slot, in an instance in which a size or position of the battery component (701B) exceeds a battery bulge threshold.

2. The mobile device (700B) of claim 1, wherein the battery component (701B) comprises lithium-ion or a lithium polymer.

3. The mobile device (700B) of claim 1, further comprising a battery cover (705B) at least partially disposed on an outer surface of the battery component (701B).

4. The mobile device (700B) of claim 1, wherein the at least one battery connector (711B) is at least partially disposed on one or more of a side surface and a bottom surface of the battery component (701B).

5. The mobile device (700B) of claim 1, wherein the at least one electrical connector (709B) is disposed on an inner bottom surface of the mobile device (700B) adjacent the cavity.

6. The mobile device (700B) of claim 1, wherein the at least one receiving element (707B) comprises a notch, groove, or protuberance.

7. The mobile device (700B) of claim 1, wherein:
the at least one receiving element (707B) is configured to limit movement of a first side of the battery component (701B), and
the at least one battery connector (711B) is disposed on a second side of the battery component (701B) opposite the first side.

8. The mobile device (700B) of claim 1, wherein the battery (701B) bulge threshold is between 5% and 10% of a battery component (701B) size.

9. The mobile device (700B) of claim 1, wherein the at least one electrical connector (709B) comprises a compressible pin or spring loaded element.

## Patentansprüche

1. Mobile Vorrichtung (700B), umfassend:
einen Körper (703B), der einen Hohlraum definiert; und
eine Batteriekomponente (701B), die dazu konfiguriert ist, mindestens teilweise innerhalb des Hohlraums angeordnet zu sein, wobei die Batteriekomponente (701B) mindestens einen Batterieverbinder (711B) umfasst, der an einer Außenfläche der Batteriekomponente (701B) angeordnet ist, wobei:
der mindestens eine Batterieverbinder (711B) dazu positioniert ist, in Kontakt mit mindestens einem elektrischen Verbinder (709B) der mobilen Vorrichtung (700B) zu kommen, um Energie an die mobile Vorrichtung (700B) bereitzustellen; und
mindestens ein von einer Innenfläche der mobilen Vorrichtung (700B) herausragendes empfangendes Element (707B), das dazu konfiguriert ist, in mindestens einen an der Batteriekomponente (701B) definierten Schlitz einzugreifen, und
wobei die mobile Vorrichtung (700B) dazu konfiguriert ist, eine Ausbildung eines Kontakts zwischen dem mindestens einen Batterieverbinder (711B) und dem mindestens einen elektrischen Verbinder (709B) zu verhindern,
wobei die Batteriekomponente (701B) dazu konfiguriert ist, sich in Bezug auf eine Achse des mindestens einen empfangenden Elements (707B) zu drehen, wenn dieses im Eingriff mit dem mindestens einen Schlitz ist, in einem Fall, in dem eine Größe oder Position der Batteriekomponente (701B) einen Batterie-Wölbungsschwellenwert überschreitet.

2. Mobile Vorrichtung (700B) nach Anspruch 1, wobei die Batteriekomponente (701B) Lithium-Ionen oder ein Lithium-Polymer umfasst.

3. Mobile Vorrichtung (700B) nach Anspruch 1, ferner umfassend eine Batterieabdeckung (705B), die mindestens teilweise an einer Außenfläche der Batteriekomponente (701B) angeordnet ist.

4. Mobile Vorrichtung (700B) nach Anspruch 1, wobei der mindestens eine Batterieverbinder (711B) mindestens teilweise an einer oder mehreren von einer Seitenfläche und einer Bodenfläche der Batteriekomponente (701B) angeordnet ist.

5. Mobile Vorrichtung (700B) nach Anspruch 1, wobei der mindestens eine elektrische Verbinder (709B) an einer Bodeninnenfläche der mobilen Vorrichtung (700B) angrenzend an den Hohlraum angeordnet ist.

6. Mobile Vorrichtung (700B) nach Anspruch 1, wobei das mindestens eine empfangende Element (707B) eine Kerbe, eine Rille oder einen Vorsprung umfasst.

7. Mobile Vorrichtung (700B) nach Anspruch 1, wobei:
das mindestens eine empfangende Element (707B) dazu konfiguriert ist, eine Bewegung einer ersten Seite der Batteriekomponente (701B) zu begrenzen, und
der mindestens eine Batterieverbinder (711B) auf einer zweiten Seite der Batteriekomponente (701B) gegenüber der ersten Seite angeordnet ist.

8. Mobile Vorrichtung (700B) nach Anspruch 1, wobei der Batterie (701B)-Wölbungsschwellenwert zwischen 5 % und 10 % einer Größe der Batteriekomponente (701B) beträgt.

9. Mobile Vorrichtung (700B) nach Anspruch 1, wobei der mindestens eine elektrische Verbinder (709B) einen zusammendrückbaren Stift oder ein federbelastetes Element umfasst.

## Revendications

1. Dispositif mobile (700B) comprenant :
un corps (703B) définissant une cavité ; et
un composant de batterie (701B) qui est configuré pour être au moins partiellement disposé à l'intérieur de la cavité, le composant de batterie (701B) comprenant au moins un connecteur de batterie (711B) disposé sur une surface extérieure du composant de batterie (701B), dans lequel :
l'au moins un connecteur de batterie (711B) est positionné pour entrer en contact avec au moins un connecteur électrique (709B) du dispositif mobile (700B) pour fournir de l'énergie au dispositif mobile (700B) ; et
au moins un élément récepteur (707B) faisant saillie à partir d'une surface intérieure du dispositif mobile (700B) qui est configuré pour s'engager dans au moins une fente définie sur le composant de batterie (701B), et
le dispositif mobile (700B) est configuré pour empêcher la formation d'un contact entre l'au moins un connecteur de batterie (711B) et l'au moins un connecteur électrique (709B),
dans lequel le composant de batterie (701B) est configuré pour tourner par rapport à un axe de l'au moins un élément récepteur (707B) lorsqu'il est engagé dans l'au moins une fente, dans un cas où une taille ou une position du composant de batterie (701B) dépasse un seuil de gonflement de la batterie.

2. Dispositif mobile (700B) selon la revendication 1, dans lequel le composant de batterie (701B) comprend du lithium-ion ou un polymère de lithium.

3. Dispositif mobile (700B) selon la revendication 1, comprenant en outre un couvercle de batterie (705B) au moins partiellement disposé sur une surface extérieure du composant de batterie (701B).

4. Dispositif mobile (700B) selon la revendication 1, dans lequel l'au moins un connecteur de batterie (711B) est au moins partiellement disposé sur une ou plusieurs parmi une surface latérale et une surface inférieure du composant de batterie (701B).

5. Dispositif mobile (700B) selon la revendication 1, dans lequel l'au moins un connecteur électrique (709B) est disposé sur une surface inférieure intérieure du dispositif mobile (700B) adjacente à la cavité.

6. Dispositif mobile (700B) selon la revendication 1, dans lequel l'au moins un élément récepteur (707B) comprend une encoche, une rainure ou une protubérance.

7. Dispositif mobile (700B) selon la revendication 1, dans lequel :
l'au moins un élément récepteur (707B) est configuré pour limiter le mouvement d'un premier côté du composant de batterie (701B), et
l'au moins un connecteur de batterie (711B) est disposé sur un deuxième côté du composant de batterie (701B) opposé au premier côté.

8. Dispositif mobile (700B) selon la revendication 1, dans lequel le seuil de gonflement de la batterie (701B) est compris entre 5 % et 10 % de la taille d'un composant de batterie (701B).

9. Dispositif mobile (700B) selon la revendication 1, dans lequel l'au moins un connecteur électrique (709B) comprend une broche compressible ou un élément rappelé par ressort.
